# EUROPÄISCHE PATENTANMELDUNG

(11) **EP 1 889 708 A1**
(43) Veröffentlichungstag der Anmeldung: **20.02.2008**
(21) Anmeldenummer: 07016067.6
(22) Anmeldetag: 16.08.2007
(51) Int. Cl.: B29C 65/20, E06B 3/96

(54) **Verfahren und Vorrichtung zum Verschweissen von Kunststoffprofilen, insbesondere zur Bildung von Fenster- oder Türrahmen**

(30) Priorität: 18.08.2006 DE 102006038796
(71) Anmelder: ROTOX GmbH B. EISENBACH, 56858 Grenderich (DE)
(72) Erfinder:
(74) Vertreter: Müller, Eckhard

(57) **Zusammenfassung**

Es wird ein Verfahren und eine Vorrichtung zum Verschweißen von Kunststoffprofilen (1, 2), insbesondere zur Bildung von Fenster- oder Türrahmen beschrieben, wobei die eingespannten Profile (1, 2) mit ihren Verbindungsflächen (3, 4) gegen einen von einer Ausgangsstellung in eine Arbeitsstellung einfahrbaren Heizspiegel (5) bringbar sind, um die Verbindungsflächen (3, 4) vor dem Zusammenpressen zu erhitzen. Um eine gute Zugänglichkeit zu den Einrichtungen für die Trennschutzfolie zu ermöglichen ist es vorgesehen, dass der Heizspiegel (5) beim Verfahren zwischen Ausgangs- und Arbeitsstellung sowohl eine Bewegung parallel zur Aufspannebene (6) der Profile (1) als auch senkrecht dazu ausführt. Insbesondere ist der Heizspiegel (5) an einer gegenüber der Aufspannebene (6) geneigt verlaufenden Führung (7) verfahrbar (Figur 1).

## Beschreibung

Die Erfindung bezieht sich auf ein Verfahren und eine Vorrichtung zum Verschweißen von Kunststoffprofilen, insbesondere zur Bildung von Fenster- oder Türrahmen, gemäß dem Oberbegriff des Anspruches 1 bzw. des Anspruches 4.

### Stand der Technik

Aus der DE 36 41 019 C2 ist eine Vorrichtung zum Verschweißen von Kunststoffprofilen zu Rahmen für Fenster oder Türen bekannt, mit zwei ihrem Abstand zueinander verstellbaren Schweißeinheiten. Jede Schweißeinheit weist Spanneinrichtungen zum Einspannen der an ihren Verbindungsflächen miteinander zu verschweißenden Profilstücke auf, mit einem zwischen die Spanneinrichtungen verfahrbaren Anschlag zum Positionieren der Profilstücke und einem Schweißspiegel, der ebenfalls zwischen die miteinander zu verbindenden Enden der Kunststoffprofile bringbar ist, um die Verbindungsflächen vor dem Zusammenpressen zu erhitzen.

Das Einfahren des Schweißspiegels zwischen die Verbindungsflächen der miteinander zu verschweißenden Profilstücke erfolgt durch eine Verfahrbewegung parallel zur Aufspannebene der Profile. Üblicherweise werden als Stellantriebe für die Schweißspiegel Pneumatikzylinder oder ggf. auch Spindelantriebe eingesetzt, so dass die Schweißeinheiten in Richtung der Verstellbewegung des Schweißspiegels gesehen, groß bauen.

Von anderen Schweißvorrichtungen für Kunststoffprofile ist es bekannt, den Schweißspiegel senkrecht zur Aufspannebene für die zu verschweißenden Profile zu verfahren. Damit gelangt der Schweißspiegel in zurückgezogener Ruheposition in den Bereich der zum Spannen der Profile vorgesehenen Spannzylinder. Dadurch ergibt sich jedoch nur ein beschränkter Bauraum zum Befestigen von Trennschutzfolien an dem Schweißspiegel mit Vorrats- und Fixiervorrichtung für die Folie. Derartige Trennfolien werden über den Heizspiegel gespannt, um auszuschließen, dass die Kunststoffprofile beim Aufheizen der Verbindungsflächen an dem Schweißspiegel haften bzw. anbacken und/oder Kunststoffreste sich am Schweißspiegel anlagern. Durch die Verfahrbarkeit des Schweißspiegels in Richtung senkrecht zur Aufspannebene der Profile in eine Ausgangsposition im Bereich der Spannzylinder ist zudem eine schlechte Zugänglichkeit der Vorratsvorrichtung für die Folie zum Zwecke des Wechselns gegeben.

Darüber können sich im Raum oberhalb der Profile zusätzliche Einrichtungen zum Verschieben und/oder Niederhalten von bereits in die Profile eingezogene Dichtungen befinden, was die Zugänglichkeit der Einrichtungen für die Trennschutzfolie ebenfalls behindern kann.

Problem

Davon ausgehend liegt der Erfindung die Aufgabe zugrunde, ein Verfahren mit den Merkmalen des Oberbegriffs des Anspruches 1 sowie eine entsprechende Vorrichtung mit den Merkmalen des Anspruches 4 dahingehend weiterzuentwickeln, dass eine gute Zugänglichkeit zu den Einrichtungen für die Trennschutzfolie gegeben ist.

### Erfindung und vorteilhafte Wirkungen

Gelöst wird diese Aufgabe verfahrensmäßig durch ein Verfahren mit den Merkmalen des Anspruches 1, vorrichtungsgemäß durch die Vorrichtung mit den Merkmalen des Anspruchs 4. Vorteilhafte Ausgestaltungen finden sich in den jeweiligen Unteransprüchen.

Bei dem erfindungsgemäßen Verfahren wird der Heizspiegel zum Anschmelzen des Kunststoffes im Bereich der Verbindungsfläche der miteinander zu verbindenden Profilstücke, bspw. beim Zurückziehen von der Arbeitsposition in die Ruhestellung, neben einer translatorischen Bewegung parallel zur Aufnahmeebene der Profile, gleichzeitig in eine gegenüber der Profilaufnahmeebene angehobene Position i.W. translatorisch verfahren. Beim Einfahren zwischen die Verbindungsflächen der Kunststoffprofile erfolgt entsprechend ein Absenken des Schweißspiegels gegenüber der Auflageebene.

Anders als im Stand der Technik, wie etwa gemäß der DE 2 300 626 A üblich wird der Heizspiegel nach dem erfindungsgemäßen Verfahren auch nicht bezüglich einer feststehenden Achse verschwenkt sondern er wird entlang oder längs einer gegenüber der Aufspannebene der Profile geneigt verlaufenden, im Wesentlichen geradlinigen Führung verfahren. Die für den Heizspiegel vorgesehene Verfahrbewegung ist hierbei i.W. translatorisch und geradlinig.

Durch die Erfindung ist der Heizspiegel und die Einrichtung für die Trennfolie für den Bediener gut erreichbar, so dass sich das Auswechseln der Schutzfolie schnell und einfach bewerkstelligen lässt. Darüber hinaus ist der Raum ober- oder unterhalb der Aufspannebene frei für andere elektrische oder mechanische Optionen, wie bspw. der Anordnung von Dichtungsstempeln für bereits in die Profilstücke eingezogene Dichtungen, um diese während des Schweißvorganges zu fixieren. Gegenüber einem Verfahren des Schweißspiegels in einer Richtung parallel zur Aufspannebene führt die Erfindung zur einer wesentlich kompakteren Bauweise, da die Längserstreckung des Stellgliedes mit Stellantrieb im Vergleich zur Anordnung parallel zur Aufspannebene lediglich in der Projektion zur Aufspannebene eingeht

Nach einer ersten besonderen Ausführungsform der Erfindung ist es vorgesehen, dass die Verfahrbewegung des Heizspiegels in beiden Richtungen, d.h. parallel und senkrecht zur Aufspannebene der Rahmenteile i. W. simultan erfolgt, was sich günstig auf die Taktzeit für die Verschweißung eines Rahmenecks auswirkt.

Dabei bietet es sich an, dass die Verfahrbewegung des Heizspiegels in beiden Richtungen mit gleicher Geschwindigkeit durchgeführt wird.

Der Verfahrweg des Heizspiegels in beiden Richtungen kann gleich sein, denkbar ist es aber auch, dass der Verfahrweg des Heizspiegels senkrecht zur Aufspannebene der Profile größer ist als der Verfahrweg parallel zur Aufspannebene.

Bei der erfindungsgemäßen Schweißvorrichtung ist es vorgesehen, dass der Heizspiegel an einer gegenüber der Aufspannebene geneigt verlaufenden Führung verfahrbar ist. Dabei wird der Schweißspiegel von einer Ruheposition, bei der sich der Schweißspiegel mit Abstand oberhalb oder bspw. auch unterhalb der Aufspannebene für die Profile befindet, in eine Arbeitsposition auf die Aufspannebene hin verfahren. In der Ruheposition ist der Heizspiegel zum Wechseln der Trennschutzfolie für das Personal gut erreichbar. Auch ist der Raum ober- oder unterhalb des Rahmenecks frei für andere Optionen, wie bspw. der Anordnung von Einrichtungen für in die Profile bereits eingezogene elastische Dichtungen.

Dabei kann die Führung gegenüber der Aufspannebene einen Winkel von 30° bis 70° einnehmen.

Nach einer besonderen Ausgestaltung der Erfindung ist es vorgesehen, dass der Heizspiegel einstellbar an einem Halter anordnenbar ist, der längs der Führung verfahrbar ist. Hierdurch ist in besonders einfacher Weise ein Ausrichten des Heizspiegels, auf die Gehrungs- bzw. Verbindungslinie der beiden Profilstücke ermöglicht, wie auch ein Ausrichten der Heizflächen senkrecht zur Aufspannebene der Profile.

Zum Verfahren des Heizspiegels ist ein Stellantrieb vorgesehen, dessen Stellglied parallel zur Führung verfahrbar ist, was zu einem besonders kompakten Aufbau führt, indem der Stellantrieb mit Stellglied lediglich in seiner Projektion in die Längserstreckung der Schweißeinheit eingeht.

Heizspiegel mit Führung und zugeordnetem Stellantrieb sind vorzugsweise zusammen mit der Aufnahmeeinrichtung für die Profile und der Spanneinrichtung an einem gemeinsamen Schlitten verfahrbar, was den konstruktiven Aufbau als auch die Arbeitsweise der Vorrichtung erheblich vereinfacht und damit zu kürzeren Taktzeiten bei der Bearbeitung der Eckverbindung führt.

### Ausführungsbeispiel

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: eine perspektivische Ansicht eines Ausschnittes aus einer möglichen Ausführungsform einer erfindungsgemäßen Schweißvorrichtung mit in Ausgangsstellung befindlichem Schweißspiegel und
- Figur 2: die Schweißvorrichtung gemäß Figur 1 mit in Arbeitsstellung befindlichem Schweißspiegel.

Auf einem Grundgestell 12 einer Vorrichtung zum Schweißen von Kunststoffprofilen 1, 2 zu Rahmen von Fenstern oder Türen ist eine Spanneinheit zum Einspannen der Profile 1, 2 vorgesehen, welche eine geteilte Profilauflage 13 aufweist, zum Auflegen und als Widerlager für die Profile 1, 2. Dabei liegen die Profile 1, 2 mit ihren Außenseiten an ggf. verstellbaren Seitenanschlägen 14 an. Das Aufspannen der Profile 1, 2 auf der Profilauflage 13 erfolgt mittels einer ebenfalls geteilten Profilspannung 15, welche bei dem hier gewählten Ausführungsbeispiel durch zugeordnete pneumatisch betätigbaren Spannzylinder 16 betätigt werden.

In den zwischen der geteilten Profilspannung 15 sich ergebenden Spalt 17 und ebenso in den (nicht dargestellten) Spalt der geteilten Profilauflage 13 ist ein (ebenfalls nicht dargestellter) Anschlag zum genauen Positionieren der miteinander zu verbindenden Kunststoffprofile 1, 2 einfahrbar.

An dem Maschinengestell 12 ist weiterhin ein sogenannter Schweißspiegel 5 einfahrbar, um die auf Gehrung geschnittenen Stoß- oder Verbindungsflächen 3, 4 der beiden Profile 1, 2 vor dem Zusammenpressen zu erhitzen.

Ein solcher Heizspiegel 5 besteht üblicherweise aus einer elektrisch beheizbaren Platte, über die etwa U-förmig eine Trennschutzfolie aus Teflon gespannt ist. Diese Trennfolie soll ausschließen, dass die Kunststoffprofile 1,2 beim Aufheizen der Verbindungsflächen 3, 4 an den Schweißspiegel 5 haften bzw. anbacken.

Der Schweißspiegel 5 ist einstellbar an einem Halter 8 angeordnet, der zusammen mit dem Heizspiegel 5 längs einer Führung 7 verfahrbar ist. Die Führung 7 ist bei dem hier gewählten Ausführungsbeispiel an der Hypotenuse eines als rechtwinkligen Dreiecks ausgebildeten Rahmenteils 18 vorgesehen.

Das Rahmenteil 18 bildet in Diagonalrichtung des späteren Rahmenecks eine Baueinheit mit dem Grundgestell 12.

Zum Verfahren des Heizspiegels 5 ist bei dem hier gewählten Ausführungsbeispiel als Stellantrieb 9 ein Pneumatikzylinder vorgesehen, dessen Stellglied bzw. Kolbenstange 10 parallel zur Führung 7 verläuft. Der Neigungswinkel zwischen Führung 7 und der durch die Profilauflage 13 gebildeten Aufspannebene 6 für den Rahmen beträgt bei dem hier gewählten Ausführungsbeispiel α = 55°. Selbstverständlich sind auch andere Neigungen möglich.

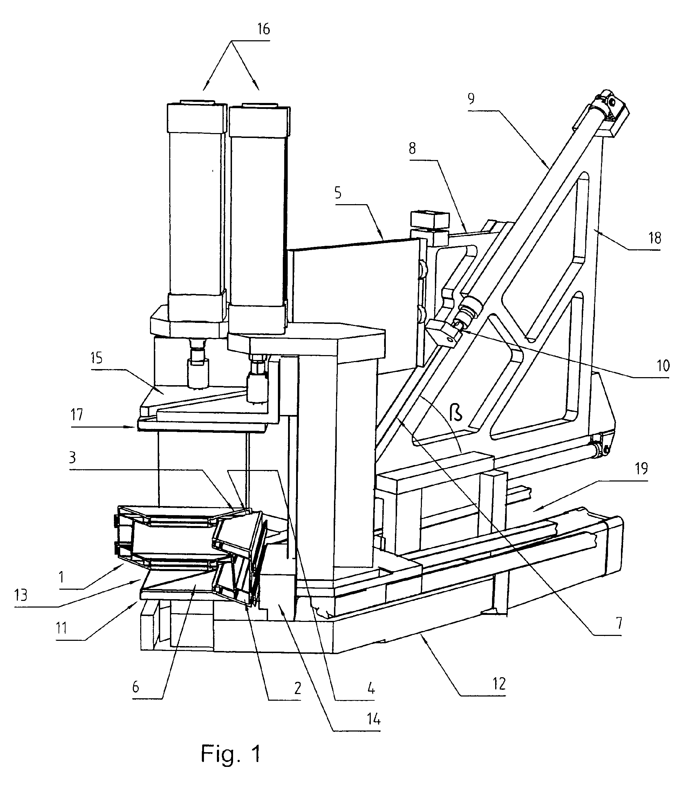

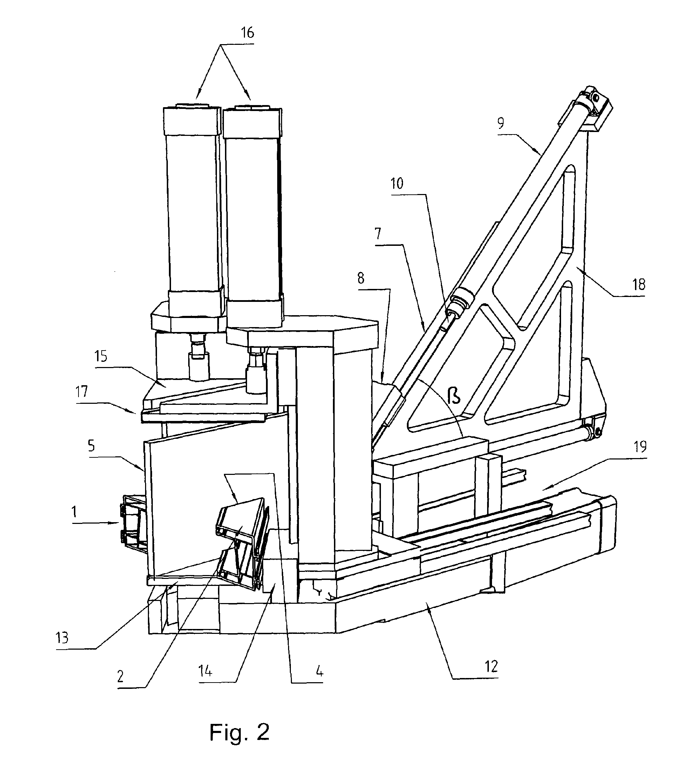

Die Herstellung von Fensterrahmen oder dgl. aus Kunststoffprofilen 1, 2 erfolgt in der Weise, dass bei eingefahrenem Positionieranschlag die zu verbindenden Profilstücke 1, 2 auf die geteilte Profilauflage 13 aufgelegt und positioniert werden. Dabei gelangen die Profilteile 1, 2 mit ihren auf Gehrung geschnittenen Verbindungsflächen 3, 4 in Anlagestellung mit dem Positionieranschlag und mit ihren Außenseiten an den auflageseitigen Außenanschlägen 14. Sodann werden die Profile 1, 2 durch Druckbeaufschlagung der Spannzylinder 16 durch die Profilspannung 15 auf der Profilauflage 13 eingespannt. Danach wird der Positionieranschlag eingefahren und der Schweißspiegel 5 von seiner in Figur 1 dargestellten Ausgangsstellung in die in Figur 2 dargestellte Arbeitsposition verfahren, wobei der Heizspiegel 5 den Spalt 16 zwischen der geteilten Profilspannung 15 und denjenigen 11 der geteilten Profilauflage 13 durchgreift. Sodann werden die Profile 1, 2 mit ihren Verbindungsflächen 3, 4 gegen den Heizspiegel 5 gepresst.

Nach dem Erhitzen der Rahmenprofile 1, 2 an den Gehrungsflächen 3, 4 auf Schweißtemperatur und Verfahren des Schweißspiegels 5 in die Ruheposition gemäß Figur 1 erfolgt das Zusammenfügen der beiden Rahmenprofile 1, 2. Die erhitzten und deformierbaren Bereiche der Rahmenprofile 1, 2 erstrecken sich von den Gehrungsflächen 3, 4 einige Millimeter in die Tiefe. Um eine stabile Schweißverbindung zwischen den beiden Rahmenprofilen 1, 2 zu erhalten, werden diese derart gegeneinander gedrückt, dass ein Teil des erhitzten Kunststoffmaterials als Schweißzugabe seitlich weggedrückt wird. Die infolge des Schweißvorganges sich zwischen den beiden Rahmenprofilen 1, 2 ergebende Schweißraupe wird in einer nachfolgenden Bearbeitungsstation entfernt.

Durch das Verfahren des Heizspiegels von seiner Arbeitsstellung in einer Richtung parallel zur Aufspannebene der Profile 1, 2 und in einer Richtung senkrecht dazu, ist der Heizspiegel zum Wechsel der Teflonschutzfolie vom Bediener gut erreichbar und der Raum oberhalb des Rahmensecks frei für die Anordnung von Dichtungsstempeln oder anderen mechanischen oder elektrischen Optionen.

Bezugszeichenliste
- 1 -: Kunststoffprofil
- 2 -: Kunststoffprofil
- 3 -: Verbindungsfläche
- 4 -: Verbindungsfläche
- 5 -: Schweißspiegel
- 6 -: Aufspannebene
- 7 -: Führung
- 8 -: Halter
- 9 -: Stellantrieb
- 10 -: Stellglied
- 11 -: Spalt
- 12 -: Grundgestell
- 13 -: Profilauflage
- 14 -: Seitenanschlag
- 15 -: Profilspannung
- 16 -: Spannzylinder
- 17 -: Spalt
- 18 -: Rahmenteil
- 19 -: Schlittenanordnung

- α -: Neigungswinkel

## Patentansprüche

1. Verfahren zum Verschweißen von Kunststoffprofilen (1), insbesondere zur Bildung von Fenster- oder Türrahmen, wobei die eingespannten Profile (1, 2) mit ihren Verbindungsflächen (3, 4) gegen einen von einer Ausgangsstellung in eine Arbeitsstellung einfahrbaren Heizspiegel (5) bringbar sind, um die Verbindungsflächen (3, 4) vor dem Zusammenpressen zu erhitzen, **dadurch gekennzeichnet, dass** der Heizspiegel (5) längs einer gegenüber der Aufspannebene (6) der Profile (1, 2) geneigt verlaufenden Führung beim Verfahren zwischen Ausgangs- und Arbeitsstellung verfahren wird.

2. Verfahren nach Anspruch 1, **dadurch gekennzeichnet, dass** die Verfahrbewegung des Heizspiegels (5) in beiden Richtungen simultan, vorzugsweise mit gleicher Geschwindigkeit erfolgt.

3. Verfahren nach Anspruch 1 oder 2, **dadurch gekennzeichnet, dass** der Verfahrweg des Heizspiegels (5) in beiden Richtungen gleich ist.

4. Vorrichtung zum Verschweißen von Kunststoffprofilen (1, 2), insbesondere zur Bildung von Fenster- oder Türrahmen, wobei die eingespannten Profile (1, 2) mit ihren Verbindungsflächen (3, 4) gegen einen von einer Ausgangsstellung in eine Arbeitsstellung einfahrbaren Heizspiegel (5) bringbar sind, um die Verbindungsflächen (3, 4) vor dem Zusammenpressen zu erhitzen, insbesondere zur Durchführung des Verfahrens nach einem der vorhergehenden Ansprüche, **dadurch gekennzeichnet, dass** der Heizspiegel (5) längs oder entlang einer gegenüber der Aufspannebene (6) der Profile (1, 2) geneigt verlaufenden Führung (7) verfahrbar ist.

5. Vorrichtung nach Anspruch 4, **dadurch gekennzeichnet, dass** die Führung (7) gegenüber der Aufspannebene (6) ein Winkel von α = 30° bis α = 70°, vorzugsweise etwa α = 55°, aufweist.

6. Vorrichtung nach Anspruch 4 oder 5, **dadurch gekennzeichnet, dass** der Heizspiegel (5) einstellbar an einem Halter (8) anordnenbar ist, der längs der Führung (7) verfahrbar ist.

7. Vorrichtung nach einem der Ansprüche 4 bis 6, **dadurch gekennzeichnet, dass** zum Verfahren des Heizspiegels (5) ein, vorzugsweise pneumatisch betätigbarer Stellantrieb (9) vorgesehen ist, dessen Stellglied (10) parallel zur Führung (7) verfahrbar ist.

8. Vorrichtung nach einem der Ansprüche 4 bis 7, **dadurch gekennzeichnet, dass** der Heizspiegel (5) mit Führung (7) und Stellantrieb (9) zusammen mit der Profilauflage (13) für die Profile (1, 2) und der Profilspannung (15), vorzugsweise mittels einer Schlittenanordnung (19) gemeinsam verfahrbar ist.
